# EUROPÄISCHE PATENTSCHRIFT

(11) **EP 3 876 406 B1**
(45) Veröffentlichungstag und Bekanntmachung des Hinweises auf die Patenterteilung: **27.05.2026**
(21) Anmeldenummer: 21160667.8
(22) Anmeldetag: 04.03.2021
(51) Int. Cl.: H02M 1/12, H02M 1/44, H02H 9/08

(54) **VERFAHREN UND VORRICHTUNG ZUR KOMPENSATION EINES ABLEITSTROMS IN EINEM EMV-FILTER**
METHOD AND DEVICE FOR COMPENSATING FOR LEAKAGE CURRENT IN AN EMI-FILTER
PROCÉDÉ ET DISPOSITIF DE COMPENSATION D'UN COURANT DE FUITE DANS UN FILTRE CEM

(30) Priorität: 04.03.2020 DE 102020105832
(43) Veröffentlichungstag der Anmeldung: 08.09.2021
(73) Patentinhaber: EPA GmbH, 63486 Bruchköbel (DE)
(72) Erfinder: SCHMITZ, Georg, 63776 Mömbris (DE); DIENERSBERGER, Wolfang, 81925 München (DE)
(74) Vertreter: Stoffregen, Hans-Herbert

(56) Entgegenhaltungen:
- WO-A1-03/005578
- WO-A2-2004/001927
- JP-A- 2010 057 268
- JIANG YAN-SHU ET AL: "Research on an Inverter Output Filter for Reducing Common-Mode Voltage at Motor Terminals in PWM Drive System", COMPUTATIONAL ENGINEERING IN SYSTEMS APPLICATIONS, IMACS MULTICONFEREN CE ON, IEEE, PI, 4 October 2006 (2006-10-04), pages 1322 - 1325, XP032391979, ISBN: 978-7-302-13922-5, DOI: 10.1109/CESA.2006.4281842

## Beschreibung

Die Erfindung betrifft ein Verfahren zur Kompensation eines durch eine Oberwelle in einer Spannung eines Stromnetzes durch ein EMV-Filter verursachten betriebsbedingten Ableitstroms nach dem Oberbegriff des Anspruchs 1.

Ferner betrifft die Erfindung eine Vorrichtung zur Durchführung des Verfahrens nach dem Oberbegriff des Anspruchs 6 sowie ein EMV-Filter nach Anspruch 13.

Ein Verfahren und eine Vorrichtung der eingangs genannten Art ist aus der Veröffentlichung JIANG YAN-SHU u.a.: "Research on an Inverter Output Filter for Reducing Common-Mode Voltage at Motor Terminals in PWM Drive System", XP032391979, bekannt. Beschrieben wird ein EMV-Filter am Ausgang eines PWM-Inverters zur Reduzierung von betriebsbedingten Ableitströmen. Das EMV-Filter umfasst drei Impedanzen, die von Phasenleitern eines Drehstromnetzes zu einem Sternpunkt geschaltet sind. Der Sternpunkt ist über eine weitere Impedanz mit Erdpotential verbunden. Zur Kompensation des Ableitstroms wird die in der weiteren Impedanz anliegende Spannung gemessen.

Die JP 2010 057268 A betrifft ein Störfilter zur Kompensation eines Ableitstroms auf der Ausgangsseite eines Wechselrichters. Das Filter umfasst drei Kondensatoren, die jeweils mit einem ersten Anschluss mit einem Phasenleiter und einem zweiten Anschluss mit einem Sternpunkt verbunden sind, wobei der Sternpunkt über einen weiteren Kondensator mit Erdpotential verbunden ist. Die an dem Erdungskondensator anliegende Spannung wird ausgewertet, um einen Kompensationsstrom zu erzeugen.

Die WO 03/005578 A1 betrifft ein aktives EMV-Filter, welches ausgebildet ist, Niederspannungs-Verstärkergeräte zu verwenden, in denen eine separate Verstärker-Gleichstromquelle verwendet wird, die nicht mit der Betriebsspannung des Systems verbunden ist.

Die WO 2004/001927 A2 betrifft ein aktives EMV-Filter zur Erfassung eines Stroms in einem Erdleiter oder einem Phasenleiter als eine an einem Kondensator abfallende Spannung, wobei der Kondensator mit der Erdleitung verbunden ist.

Ein Verfahren und eine Vorrichtung der eingangs genannten Art ist des Weiteren aus der DE 10 2018 102 122 A1 bekannt. Beim Betrieb von Maschinen und Anlagen werden häufig Schaltnetzteile und elektronische Antriebe verwendet. Um die gesetzlichen Anforderungen an die elektromagnetische Verträglichkeit (EMV) zu erreichen, sind Filtermaßnahmen gegen elektrische Störungen nötig.

Hierzu werden EMV-Filter eingesetzt. Diese EMV-Filter weisen mit Schutz- und Potentialausgleichsleiter verbundene Funkentstörkondensatoren auf, durch die Ableitströme entstehen. Ein Ableitstrom ist ein elektrischer Strom, der unter üblichen Betriebsbedingungen in einem unerwünschten Strompfad fließt (Internationales elektrotechnisches Wörterbuch - IEV 195-05-15).

Werden in elektrischen Anlagen zum Sach- und Personenschutz Fehlerstromschutzschalter eingesetzt, können die gegen Erd- oder Massepotential abfließenden Ableitströme den Fehlerstromschutzschalter - insbesondere, wenn dieser zum Personenschutz dient - auslösen.

Die DE 10 2018 102 122 A1 beschreibt eine Vorrichtung mit einem Laststromkreis, der einen Ableitstrom erzeugt, einem EMV-Filter, einem Frequenzumrichter, einem Motorkabel und einem Motor. Zur Kompensation des Ableitstroms wird vorgeschlagen, dass beim Betrieb der Ableitstrom erfasst wird und über einen Ableitstromkompensator ein Kompensationsstrom, der dem Ableitstrom entgegengerichtet ist, erzeugt und dem Ableitstrom überlagert wird. Dadurch soll der Ableitstrom reduziert, insbesondere im Wesentlichen eliminiert werden.

Der Ableitstromkompensator umfasst eine Einrichtung zum Erfassen des Ableitstroms sowie eine Einrichtung zum Erzeugen des Kompensationsstroms, der dem Ableitstrom entgegengerichtet ist und mit dem Ableitstrom derart überlagert wird.

Mittels einer Messzange werden die Ströme von drei Phasen erfasst, wobei sich aus den entsprechenden Differenzen der Ableitstrom ergibt. Folglich ist der Ableitstrom I_{A} die Summe aller Einzelableitströme aus I_{Filter} + I_{Frequenzumrichter} + I_{Kabel} und I_{Motor} des Laststromkreises.

Die Kompensation eines einzelnen Ableitstroms, z. B. des EMV-Filters oder des Frequenzumrichters ist mit dem bekannten Verfahren bzw. der bekannten Vorrichtung nicht möglich.

Die DE 10 2011 078 304 A1 betrifft die Reduktion von Ableitströmen in einem Frequenzumrichter. Es wird ein Verfahren zum Reduzieren eines parasitären Stroms auf einer Gleichspannungsseite eines Gleichrichters offenbart, wobei wenigstens ein Potential der Gleichspannungsseite über eine Kapazität geerdet ist. Das Verfahren umfasst folgende Schritte:
- Bestimmen einer zu erwartenden Oberwelle im Ausgangsstrom auf der Gleichspannungsseite;
- Erzeugen eines Ausgleichstroms derart, dass die zu erwartende Oberwelle wenigstens teilweise ausgelöscht wird;
- Überlagern des Ausgleichstroms mit dem Ausgangstrom.

Ein Gleichrichter ist ein elektrischer Wandler in einem Laststromkreis, der einen Wechselstrom aus einer Wechselspannungsquelle in einen Gleichstrom für eine elektrische Last wandelt. Von der Wechselspannungsquelle aus gesehen, besitzt der Laststromkreis wenigstens zwei Pole, wobei ein über einen Pol in den Laststromkreis eingespeister Strom über die restlichen Pole wieder vollständig in die elektrische Energiequelle zurückgeführt wird. Zum Schutz beispielsweise von Personen vor elektrischen Schlägen, wird die Erde als Pol aus dem Laststromkreis ausgeschlossen. Dies wird durch einen Fehlerstromschutzschalter sichergestellt, der den Laststromkreis unterbricht, sobald Teile des Stroms aus dem Laststromkreis über die Erde zur Wechselspannungsquelle zurückgeführt werden.

Beim Gleichrichten des Wechselstroms entsteht eine Gleichrichtoberwelle im Gleichstrom, die durch eine nachgeschaltete Glättungskapazität zwar gedämpft, jedoch nicht vollständig entfernt werden kann.

Zudem ist ein Gleichrichter und seine nachgeschalteten Bauelemente, wie beispielsweise ein Zwischenkreis eines Frequenzumrichters, in der Regel über eine parasitäre Kapazität geerdet. Diese parasitäre Kapazität stellt für die Gleichrichtoberwelle einen Erdschluss dar, so dass die Gleichrichtoberwelle teilweise als Ableitstrom über die parasitäre Kapazität und über die Erde an die Wechselspannungsquelle zurückgeführt wird.

Übersteigt der durch die Gleichrichtoberwelle verursachte Ableitstrom einen durch den Fehlerstromschutzschalter festgelegten Grenzstrom, unterbricht der Fehlerstromschutzschalter den Laststromkreis, ohne dass tatsächlich eine Verbindung zur Erde des Laststromkreises vorliegt.

Gemäß DE 10 2011 078 304 A1 wird eine gezielte Kompensation des Oberwellenableitstroms vorgeschlagen, die zu keinerlei Einschränkungen der Funktion des Fehlerstromschutzschalters führt, da Fehlerströme, die durch eine fehlerhafte Erdung des Laststromkreises hervorgerufen werden, nicht unter diese Kompensation fallen.

Der Ausgleichstrom wird basierend auf einer an dem Gleichrichter anliegenden Wechselspannung und einer parasitären Kapazität bestimmt.

Ein weiteres Verfahren zur Kompensation eines Erdableitstroms bei elektrischen Betriebsmitteln ist aus der DE 103 53 192 A1 bekannt. Vorgeschlagen wird ein Verfahren zur Verringerung von Erdableitströmen auf einen Schutzleiter, wobei die Erdableitströme von spannungsführenden Teilen der Installation zum Schutzleiter fließen, ohne dass ein Isolationsfehler vorliegt und zwar bei elektrischen Betriebsmitteln mit einer netzgeführten Stromrichterschaltung, beispielsweise Frequenzumrichter mit netzseitiger Gleichrichterschaltung.

Die Kompensation erfolgt durch Einspeisung eines Stroms zum Schutzleiter, wobei dieser Strom gegenphasig zum Erdableitstrom sein muss, damit die Addition des Erdableitstroms und des eingespeisten Stroms ein Minimum ergibt, wodurch der Erdableitstrom kompensiert wird.

Der Kompensationsstrom wird aus einer im Gleichstromzwischenkreis des elektrischen Betriebsmittels vorhandenen Spannung, beispielsweise der Spannung an Stützkondensatoren, gewonnen, wobei der Kompensationsstrom durch eine Induktivität, die die zum Kompensieren des Erdableitstroms notwenige Phasenlage des Kompensationsstroms gewährleistet, auf den Schutzleiter geführt wird.

Die Auslegung und Herstellung der Induktivität ist allerdings mit erheblichem Aufwand verbunden.

Die DE 10 2008 024 348 A1 betrifft ein Verfahren und eine Kompensationsschaltung zur Reduktion pulsförmiger Erdströme in einer Netzanschlussleitung eines einphasigen oder mehrphasigen Systems. Die Kompensation eines Massestroms durch die Erdkapazitäten erfolgt durch eine gesteuerte Stromquelle zwischen Nullleiter und Schutzleiter.

Eine erste Kompensationsschaltung zur Fehlerstromverlagerung von einem Schutzleiter auf einen Nullleiter umfasst eine Nachbildung der Erdkapazitäten des Großgeräts. Dabei ist der Sternpunkt über einen hochohmigen Widerstand mit dem Schutzleiter verbunden, der Gleichspannungspotentialgeber an einem Eingang eines Operationsverstärkers ist.

Eine zweite Kompensationsschaltung zur Fehlerstromverlagerung von einem Schutzleiter auf einen Nullleiter ist dadurch gekennzeichnet, dass der Ausgang eines über die Leiter und den Nullleiter gespeisten Summenstromwandlers über einen Bürdenwiderstand mittelbar über einen Widerstand R2 an einen Eingang eines Operationsverstärkers angeschlossen ist.

Ferner wird vorgeschlagen, dass die Ansteuerung der gesteuerten Stromquelle durch einen P-Regler erfolgt, der den Stromfluss durch den Schutzleiter in einem Frequenzbereich genügend oberhalb der Grundschwingungsfrequenz nahezu zu Null regelt,

Die US 10,139,848 B1 betrifft ein Verfahren zur Erzeugung eines Kompensationsstroms in einem Ladesystem für Elektromobile. Das System umfasst eine Stromquelle, einen Stromwandler, eine Ableitstromkompensationseinheit, eine Last und ein Erdpotential. Der Stromwandler ist mit der Stromquelle verbunden und versorgt die Last. Während des Betriebs des Stromwandlers fließt ein Gleichtaktstrom von der Last zu dem Erdungsknoten einer Ableitkapazität. Die Kompensationsschaltung empfängt zumindest ein Signal, welches von dem Gleichtaktstrom abhängig ist und erzeugt einen Kompensationsstrom, der in den zumindest einen Knoten des Systems eingeleitet wird. Der Kompensationsstrom hat eine Amplitude, die einer Amplitude des Gegentaktstroms entgegengesetzt ist.

Die US 2014/0292401 A betrifft ein aktives spannungsgespeistes "feed-forward" EMI-Filter, umfassend einen Rauschsignalreduktions- und Stromreduktionsschaltkreis, welcher EMI-Rauschen empfängt, welches durch eine Rauschquelle erzeugt wird und einen Rauschspannungskompensationsschaltkreis, der im Betrieb mit dem Rauscherfassungs- und Stromrekonstruktionsschaltkreis gekoppelt ist. Der Schaltkreis generiert ein Rauschspannungskompensationssignal basierend auf dem EMI-Rauschen, welches durch den Rauschdetektionsschaltkreis rekonstruiert wird.

Die US 2014/0071719 A1 betrifft ein Verfahren zur Rauschfilterung. Ein Rauschfilterschaltkreis verwendet eine "open loop"-Signalverarbeitung, um ein Signal zu verarbeiten, welches das Rauschen verursacht und erzeugt ein Signal, welches in das System rückgekoppelt wird, um die durch Rauschen verursachten Ströme zu kompensieren.

Die DE 11 2007 003 682 T5 betrifft ein EMV-Filter, um eine Rauschkomponente in einer Stromleitung zu filtern. Das EMV-Filter umfasst mindestens eine Induktivität in der Stromleitung, ein Nebenschlussmodul für den Erdnebenschluss, mindestens in einem vorgegebenen Frequenzband, wobei besagte Rauschkomponente in der Stromleitung, umfassend einen Hochpassfilter, welches ein Rauschsignal bereitstellt, das eine Rauschkomponente in der Stromleitung repräsentiert, und eine kontrollierte Quelle in Antwort auf besagtes Rauschsignal, welches einen Strom, der durch das Rauschsignal kontrolliert wird, zur Erde nebenschließt.

Davon ausgehend liegt der vorliegenden Erfindung die Aufgabe zugrunde, ein Verfahren und eine Vorrichtung der eingangs genannten Art derart weiterzubilden, dass betriebsbedingte Ableitströme, die in EMV-Komponenten vor und/oder in Umrichtern erzeugt werden, auf einfache Weise sicher erfasst und präzise gegenkompensiert werden können. Auch sollen Anlagen, die mit diesen EMV-Komponenten ausgestattet sind, sicher an Fehlerstromschutzeinrichtungen betrieben werden können, wobei im Fehlerfall auftretende Fehlerströme weder erfasst noch gegenkompensiert werden sollen.

Die Erfindung bezieht sich auf ein Verfahren zur Kompensation eines durch eine Oberwelle in einer Spannung eines Stromnetzes durch ein EMV-Filter verursachten betriebsbedingten Ableitstroms gemäß Anspruch 1, eine zugehörige Vorrichtung gemäß Anspruch 6 und ein EMV-Filter gemäß Anspruch 13.

Weitergehende Ausführungsformen sind in den abhängigen Ansprüchen definiert.

Das EMV-Filter weist zumindest einen gegen Erdpotential geschalteten Erdungskondensator auf, über den der betriebsbedingte Ableitstrom IA gegen Erdpotential abgeleitet wird, wobei die dem Ableitstrom IA proportionale Größe UM unmittelbar in dem Strompfad des Erdungskondensators gemessen wird oder aus der an dem Erdungskondensator anliegenden Spannung abgeleitet wird.

Gemäß einer erfinderischen Ausführung wird zur Bildung eines RC-Gliedes in Reihe zu dem Erdungskondensator ein Messwiderstand, wie z. B. ein Shunt, geschaltet, wobei die dem Ableitstrom proportionale Größe in Form einer Messspannung an dem Messwiderstand gemessen wird.

Alternativ wird gemäß einer erfinderischen Ausführungsform die an dem Erdungskondensator anliegende Spannung mittels eines parallel zu dem Erdungskondensator geschalteten RC-Gliedes aus einer Reihenschaltung aus einem Messwiderstand und einem Messkondensator gegen Erdpotential geschaltet, wobei der Messkondensator über einen Impedanzwandler mit einem die Spannungsschwankung aufweisenden Pol und der Messwiderstand mit Erdpotential verbunden ist. Dabei wird die dem Ableitstrom proportionale Größe in Form einer Messspannung an dem Messwiderstand gemessen.

Die erfindungsgemäße Vorrichtung zeichnet sich dadurch aus, dass das EMV-Filter zumindest einen gegen Erdpotential geschalteten Erdungskondensator aufweist, über den der betriebsbedingte Ableitstrom IA gegen Erdpotential abgeleitet wird und dass unmittelbar in einem Strompfad des Erdungskondensators oder einem parallel zu dem Erdungskondensator geschalteten Strompfad eine Messeinrichtung angeordnet ist, mit der die dem Ableitstrom IA proportionale Größe UM bestimmbar ist.

Der Erfindung liegt der Gedanke zugrunde, eine den Ableitstrom IA verursachende, durch eine Oberwelle hervorgerufene Potential- bzw. Spannungsschwankung UIN des Stromnetzes mittels eines Differenziergliedes in Form eines RC-Gliedes auszuwerten. Das RC-Glied umfasst eine Reihenschaltung aus einem Messkondensator und einen Messwiderstand in Form eines Shunts, wobei die Reihenschaltung zwischen einem Pol, an dem die Potential- bzw. Spannungsschwankung anliegt, und Erdpotential geschaltet ist. An dem Messwiderstand wird die dem Ableitstrom IA proportionale Größe UM in Form einer Messspannung gemessen. Die Messspannung UM, die den zeitlichen Verlauf des Ableitstroms IA abbildet, wird invertiert und steuert eine spannungsgesteuerte Stromquelle zur Erzeugung des Kompensationsstroms IK. Der Kompensationsstrom IK, der dem Ableitstrom IA entgegengerichtet ist, wird durch die Stromquelle in das Stromnetz eingeprägt.

Mit dem erfindungsgemäßen Verfahren können betriebsbedingte Ableitströme IA, die in EMV-Komponenten wie Erdungskondensatoren erzeugt werden, in Echtzeit sicher erfasst und präzise gegenkompensiert werden. Somit können Anlagen, die zum Erreichen gesetzlicher Anforderungen an die elektromagnetische Verträglichkeit (EMV) mit solchen EMV-Komponenten ausgestattet sein müssen, an Fehlerstromschutzeinrichtungen betrieben werden. Zudem ist sichergestellt, dass im Fehlerfall auftretende Fehlerströme, d. h. Ströme, die über eine gegebene Fehlerstelle aufgrund eines Isolationsfehlers fließen (VDE 0100/200), weder erfasst, noch gegenkompensiert werden.

Die Ableitströme IA werden unmittelbar in den Verursachern, im vorliegenden Fall insbesondere den Erdungskondensatoren erfasst, und direkt gegenkompensiert. Das erfindungsgemäße Verfahren und die Vorrichtung haben keinen Einfluss auf etwaige vorgeschaltete Schutzeinrichtungen wie Fehlerstromschutzschalter.

Durch den Einsatz der erfindungsgemäßen Vorrichtung in Form eines Ableitstromkondensators können in dem EMV-Filter und/oder der Antriebskomponente wie Frequenzumrichter Kondensatoren mit höheren Kapazitäten eingesetzt werden, wodurch bessere EMV-Wirkungen erzielt werden. Die dadurch bedingt entstehenden höheren kapazitiven Ableitströme IA können auf einfache Weise durch die erfindungsgemäßen Ableitstromkompensatoren kompensiert werden.

Bei der Kompensation des Ableitstroms IA eines EMV-Filters können zur Gewinnung der dem Ableitstrom IA proportionalen Messspannung UA mehrere Verfahren angewendet werden.

Der Messwiderstand, wie z. B. Shunt, hat vorzugsweise einen Widerstand R ≤ 10 Ω und kann in den Schutzleiter-Pfad des Erdungskondensators geschaltet werden. Vorzugsweise werden induktionsfreie Präzisionswiderstände verwendet, um die Filterwirkung nicht zu beeinträchtigen.

Die Kapazität des Messkondensators kann etwa 1/10 der Kapazität des Erdungskondensators betragen. Bei einer Kapazität von z. B. 0,47 µF ergibt sich bei einer Frequenz von 2 kHz der Oberwelle eine Impedanz von 170 Ω. Für den Messwiderstand könnte daher ein Widerstand von ca. 10 Ω eingesetzt werden, ohne die Signalform zu glätten.

Die Kapazität des Messkondensators kann auch in etwa der Kapazität des Erdungskondensators entsprechen. Bei einer Kapazität von 4,7 µF ergäbe sich bei einer Frequenz von 2 kHz der Oberwelle eine Impedanz von 17 Ω. Man könnte daher einen Messwiderstand mit einem Widerstand von etwa 100 Ω einsetzen, ohne die Signalform zu glätten. Daraus ergibt sich eine Messspannung von 10 mV bei einem Ableitstrom IA von 1 mA. Der Kondensator müsste theoretisch zwar eine Spannungsfestigkeit von 300 V aufweisen, jedoch nicht die Spezifikation eines Y-Kondensators.

Die zuvor beschriebenen Ausführungsformen werden insbesondere dann eingesetzt, wenn der Erdungskondensator frei zugänglich ist, wie z. B. in einem EMV-Filter mit Y-Kondensator und einer Sternschaltung von drei X-Kondensatoren, wobei der Y-Kondensator der Erdungskondensator ist.

Bei einem Frequenzumrichter ist das EMV-Filter in Form eines Erdungskondensators, der von einem Plus- bzw. Minus-Pol gegen Erdpotential geschaltet ist, von außen nicht zugänglich.

Gemäß einer weiteren Ausführung wird für einen solchen Fall vorgeschlagen, dass die den Ableitstrom verursachende Oberwelle aufweisende DC-Spannung rein ohmsch erfasst, geteilt und einem Impedanzwandler zugeführt wird, der das Signal vorzugsweise 1:1 abbildet. Anschließend wird das Signal mittels eines Differenziergliedes in Form eines RC-Hochpass-Gliedes, einer Reihenschaltung aus Messwiderstand und Messkondensator, differenziert.

Das differenzierte Spannungssignal wird mittels eines Inverters invertiert und einer steuerbaren, vorzugsweise spannungsgesteuerten Stromquelle zugeführt, die den Kompensationsstrom erzeugt und in einen Neutralleiter, einen Schutzleiter und/oder über ein Einspeisenetzwerk in die Phasen eines Dreiphasenstromnetzes einprägt.

Das Ausgangssignal des Inverters wird mittels eines Tiefpassfilters tiefpassgefiltert, wobei der Tiefpassfilter einen Frequenzbereich von vorzugsweise 20 Hz bis 2 kHz aufweist.

Eine bevorzugte Ausführungsform zeichnet sich dadurch aus, dass der Erdungskondensator oder die den Erdungskondensator aufweisende Komponente wie Umrichter mittels eines Schaltelementes zeitverzögert mit dem Stromnetz verbunden wird. Dadurch ist sichergestellt, dass die Funktionen des Ableitstromkompensators, wie z. B. die Spannungsversorgung der Schaltung, eingeschwungen sind, bevor betriebsbedingte Ableitungen entstehen.

Eine weitere bevorzugte Ausführungsform zeichnet sich dadurch aus, dass eine Amplitude des Kompensationsstroms IK einmalig für einen bestimmten Typ des EMV-Filters eingestellt wird, wobei mittels einer Differenzstrommessung ein Differenzstrom in den Phasen L1, L2, L3 des Stromnetzes erfasst wird, wobei aus einem Vergleich des Differenzstroms und einem, vorzugsweise mittels einer Teach-Funktion, vorgegebenen variablen Stromsignal ein Steuersignal für die spannungsgesteuerte Stromquelle derart ermittelt wird, dass die Amplitude des Kompensationsstroms IK derart eingestellt wird, dass der Ableitstrom IA kompensiert wird. Durch dieses Verfahren ist sichergestellt, dass die Amplitude des Kompensationsstroms an die Amplituden von Ableitströmen verschiedener Frequenzumrichter angepasst werden kann.

Die den Ableitstrom erzeugende EMV-Komponente, insbesondere der Frequenzumrichter mit Erdungskondensator, wird mittels eines Schaltelementes wie Schütz zeitverzögert eingeschaltet, damit die Funktionen und Schaltungen des Ableitstromkompensators vor dem Entstehen von Ableitströmen im eingeschwungenen Zustand sind.

Die Zuschaltung erfolgt vorzugsweise mit einer Zeitverzögerung T im Bereich von 200 msec ≤ T ≤ 800 msec, vorzugsweise T = 500 msec.

Der erfindungsgemäße Ableitstromkompensator kann z. B. unmittelbar in dem EMV-Filter integriert werden, wodurch Kondensatoren mit höheren Kapazitäten verwendet und folglich platzraubende Induktivitäten vermieden werden können. Die EMV-Filter können wesentlich kleiner ausgebildet sein.

Das erfindungsgemäße EMV-Filter umfasst eine Sternschaltung aus X-Kondensatoren, die mit einem ersten Anschluss jeweils mit einer Phase L1, L2, L3 eines Dreiphasennetzes und mit einem zweiten Anschluss mit einem gemeinsamen Sternpunkt verbunden sind sowie zumindest einen Y-Kondensator als Erdungskondensator, der mit einem ersten Anschluss mit dem Sternpunkt der Sternschaltung aus X-Kondensatoren verbunden ist.

Gemäß der Erfindung ist vorgesehen, dass der Erdungskondensator mit seinem zweiten Anschluss über einen Messwiderstand mit Erdpotential verbunden ist oder dass parallel zu dem Erdungskondensator, vorzugsweise über einen Impedanzwandler, eine Reihenschaltung aus einem Messkondensator und einem Messwiderstand geschaltet ist, wobei an dem Messwiderstand eine dem Strom IA durch den Erdungskondensator proportionale Messspannung UM ableitbar ist, dass der Messwiderstand gegebenenfalls über ein Tiefpassfilter mit einem Eingang eines Inverters verbunden ist, dass ein Ausgang des Inverters gegebenenfalls über ein Tiefpassfilter mit dem Eingang einer gesteuerten, vorzugsweise spannungsgesteuerten Stromquelle zur Erzeugung eines Kompensationsstroms IK verbunden ist, und dass ein Ausgang der gesteuerten Stromquelle zur Einprägung des Kompensationsstroms IK in das Stromnetz mit dem Neutralleiter N, dem Schutzleiter PE und/oder mit einem Einspeisenetzwerk zur Einspeisung in die Phasen L1, L2, L3 des Drehstromnetzes verbunden ist.

Ferner kann der erfindungsgemäße Ableitstromkompensator unmittelbar in einem Frequenzumrichter und einer anderen Antriebskomponente integriert werden.

Weitere Einzelheiten, Vorteile und Merkmale der Erfindung ergeben sich nicht nur aus den Ansprüchen, den diesen zu entnehmenden Merkmalen - für sich und/oder in Kombination - , sondern auch aus der nachfolgenden Beschreibung von den Zeichnungen zu entnehmenden bevorzugten Ausführungsbeispielen.

Es zeigen:
- Fig. 1: rein schematisch eine Antriebssteuerung mit einer ersten Ausführungsform eines erfindungsgemäßen Ableitstromkompensators zur Kompensation eines Ableitstroms, der von einem netzseitigen EMV-Filter erzeugt wird und
- Fig. 2: rein schematisch eine Antriebssteuerung mit einer zweiten Ausführungsform eines erfindungsgemäßen Ableitstromkompensators zur Kompensation eines Ableitstroms, der von einem in einem Frequenzumrichter angeordneten EMV-Filter erzeugt wird.

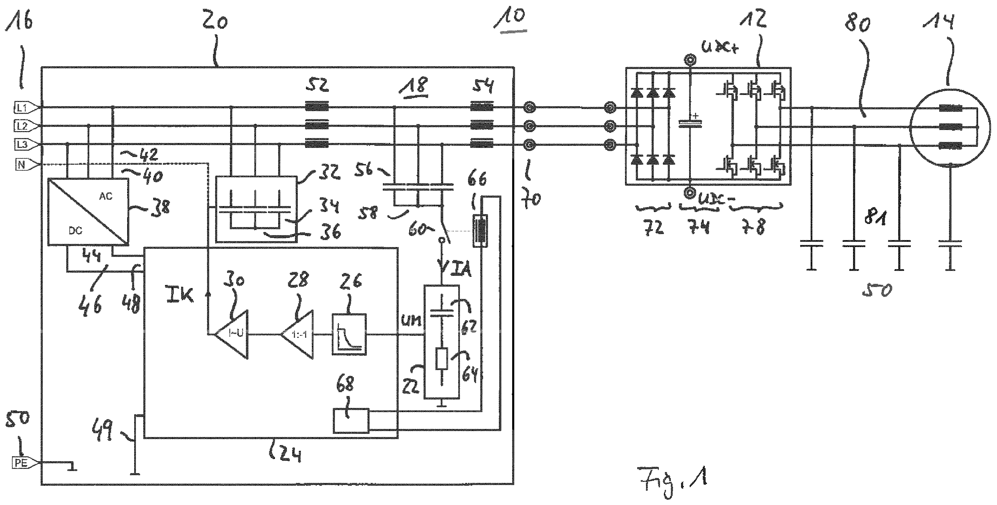

Fig. 1 zeigt rein schematisch eine elektrische Anlage 10 mit einem Frequenzumrichter 12 zum Betrieb eines elektrischen Antriebs 14 an einem Dreiphasennetz 16. Um die gesetzlichen Anforderungen an die elektromagnetische Verträglichkeit (EMV) zu erreichen, ist dem Frequenzumrichter 12 netzseitig ein EMV-Filter 18 vorgeschaltet. Ein durch Oberwellen in der Spannung des Dreiphasennetzes in dem EMV-Filter 18 verursachter Ableitstrom IA wird mittels eines Ableitstromkompensators 20 in Echtzeit sicher erfasst und mittels eines Kompensationsstroms IK präzise gegenkompensiert.

Der Ableitstromkompensator 20 ist dem Frequenzumrichter 12 netzseitig vorgeschaltet und umfasst eine Messeinrichtung 22 zur Erfassung des Ableitstroms IA sowie eine Einrichtung 24 zur Erzeugung des Kompensationsstroms IK. Die Einrichtung 24 zur Erzeugung des Kompensationsstroms IK umfasst einen Tiefpassfilter 26, einen Inverter 28 sowie eine steuerbare, spannungsgesteuerte Stromquelle 30, die ausgangsseitig mit einer an sich bekannten Einspeiseschaltung 32 zur Einspeisung des Kompensationsstroms IK in Phasen L1, L2, L3 des Dreiphasennetzes 16 oder alternativ unmittelbar mit dem Neutralleiter N verbunden ist. Die Einspeiseschaltung 32 zur Einspeisung des Kompensationsstroms IK kann eine Sternschaltung 34 aus Filter- bzw. X-Kondensatoren umfassen, deren Sternpunkt 36 mit dem Ausgang der Stromquelle 30 ggf. unter Zwischenschaltung einer Anpassschaltung verbunden ist.

Der Ableitstromkompensator 20 wird über einen Spannungswandler 38 mit Spannung versorgt. Ein Spannungseingang 40 des Spannungswandlers 38 ist eingangsseitig über Verbindungen 42 mit den Phasen L1, L2, L3 des Drehstromnetzes 16 und ein Spannungsausgang 44 ist ausgangsseitig über Verbindungen 46 mit einem Spannungseingang 48 der Einrichtung 24 verbunden. Ferner ist die Einrichtung 24 über eine Verbindung 49 mit einem auf Erdpotential 50 liegenden Schutzleiter PE verbunden.

Gemäß der Erfindung wird der Ableitstrom IA unmittelbar im Verursacherstromkreis des EMV-Filters 18 erfasst. Das EMV-Filter 18 weist für jede Phase L1, L2, L3 jeweils eine netzseitige Filterdrossel 52 sowie eine lastseitige Filterdrossel 54 auf. Ferner umfasst das EMV-Filter 18 eine Sternschaltung aus X-Kondensatoren 56, die mit einem ersten Anschluss jeweils mit einer Phase L1, L2, L3 des Dreiphasennetzes 16 zwischen den Filterdrosseln 52, 54 verbunden sind und die mit einem zweiten Anschluss mit einem gemeinsamen Sternpunkt 58 verbunden sind.

Der Sternpunkt 58 der X-Kondensatoren 56 ist über ein Schaltelement 60 mit einem ersten Anschluss eines Erdungskondensators in Form des Y-Kondensators 62 des EMV-Filters 18 verbindbar. Ein zweiter Anschluss des Y-Kondensators 62 ist in Reihe über einen Messwiderstand 64 wie z. B. Shunt mit Erdpotential 50 verbunden. Über den Y-Kondensator 62 fließt der von der Oberwelle der Spannung in dem EMV-Filter 18 erzeugte Ableitstrom IA gegen Erdpotential 50 ab. Dabei fällt an dem Messwiderstand 64 eine zum Ableitstrom IA proportionale Messspannung ab, die durch die Einrichtung 24 weiterverarbeitet wird. Folglich bildet die Reihenschaltung aus Y-Kondensator 62 und Messwiderstand 64 die Messeinrichtung 22 zur Erfassung des Ableitstroms IA. Das Schaltelement 60 ist mittels eines Aktors 66 wie Relaisspule schaltbar. Der Aktor 66 wird von einem Zeitglied 68 angesteuert, das in der Einrichtung 24 integriert sein kann.

An einem dreiphasigen Ausgang 70 des EMV-Filters 18, der den Ausgang des Ableitstromkompensators bildet, ist der Frequenzumrichter 12 angeschlossen. Der Frequenzumrichter 12 umfasst einen Gleichrichter 72, der eingangsseitig mit dem Dreiphasennetz 16 verbunden ist und aus den Sternspannungen in einem Zwischenkreis 74 eine gleichgerichtete Zwischenkreisspannung UDC+, UDC- erzeugt, die von einem Glättungskondensator 76 geglättet wird. Aus der Zwischenkreisspannung erzeugt ein Wechselrichter 78 in einer dreiphasigen Motorleitung 80 eine Wechselspannung mit einer Wechselfrequenz und einem Effektivwert, die mittels des Frequenzumrichters 12 eingestellt wird.

Nachfolgend wird die Funktion des erfindungsgemäßen Ableitstromkompensators 20 erläutert. Um die gesetzlichen Anforderungen an die elektromagnetische Verträglichkeit (EMV) beim Betrieb eines Frequenzumrichters zu erreichen, sind Filtermaßnahmen gegen elektrische Störungen nötig. Gemäß der ersten Ausführungsform ist dem Frequenzumrichter 12 netzseitig das EMV-Filter 18 in Form der Sternschaltung aus den X-bzw. Filterkondensatoren 56 und des Y- bzw. Erdungskondensators 62 vorgeschaltet.

Aufgrund einer nicht konstanten Mittelpunktspannung des 6-Puls-Brückengleichrichters 72 und/oder einer Pulsweitenmodulation in dem Frequenzumrichter 12 kann es zu Oberwellen und folglich zu betriebsmäßigen Ableitströmen IA kommen, d. h. zu Strömen, die nicht ausschließlich über die Netzleitungen eines Fehlerstromschutzschalters zu- und abfließen.

Stattdessen wird der Stromkreis über das Erd- oder Massepotential 50 geschlossen. Im dargestellten Ausführungsbeispiel fließt der Ableitstrom IA über den Y- bzw. Erdungskondensator 62 gegen Erdpotential 50. Weitere Ableitströme können durch eine kapazitive Kopplung aufgrund parasitärer Kapazitäten 81 zwischen dem Frequenzumrichter 12, der Motorleitung 80 und/oder der elektrischen Maschine 14 einerseits und Gegenständen in deren Umgebung anderseits erzeugt werden, die jedoch im vorliegenden Fall nicht berücksichtigt werden.

Gegenstand der vorliegenden Erfindung ist nämlich die Kompensation ausschließlich des durch das EMV-Filter 18 erzeugten und über den Erdungskondensator 62 nach Erdpotential 50 abfließenden Ableitstroms IA. Erfindungsgemäß ist vorgesehen, dass der Ableitstrom IA unmittelbar in dem Stromzweig erfasst wird, in dem der Erdungskondensator 62 angeordnet ist, d. h. in dem Strompfad, der den Sternpunkt 58 der Sternschaltung der Filterkondensatoren 56 mit Erdpotential 50 verbindet.

Die an dem Sternpunkt 58 anliegende Spannung ist pulsierend, d. h. dass diese eine Oberwelle aufweist, die Ursache für den Ableitstrom IA ist. Durch die pulsierende Spannung fließt in dem RC-Glied aus Erdungskondensator 62 und Messwiderstand 64 der Ableitstrom IA. Durch den Ableitstrom IA fällt an dem Messwiderstand 64 eine Messspannung ab, die proportional zu dem Ableitstrom ist. Die Messspannung UM wird erfasst und gegebenenfalls in der Messeinrichtung 22 weiter aufbereitet, insbesondere deren Spannungspegel angehoben. Das Spannungssignal wird dem Tiefpassfilter 26, welches vorzugsweise einen Frequenzbereich von 20 Hz bis 2 kHz aufweist, zugeführt, um höhere Frequenzen gezielt zu dämpfen; denn Ableitströme IA mit einer Frequenz oberhalb von 2 kHz gehören nicht zu den zu kompensierenden Ableitströmen, da diese gegebenenfalls mit entsprechenden Filterschaltungen gedämpft werden.

Nach der Tiefpassfilterung durch das Tiefpassfilter 26 wird das Spannungssignal in dem Inverter 28 invertiert und der Stromquelle 30 zugeführt. In der Stromquelle 30 wird aus dem invertierten Spannungssignal der Kompensationsstrom IK erzeugt, welcher über die Einspeiseschaltung 32 in die einzelnen Phasen L1, L2, L3 eingespeist wird. Im dargestellten Ausführungsbeispiel wird der Kompensationsstrom IK gegebenenfalls unter Zwischenschaltung einer Anpassungsschaltung in den Sternpunkt 36, d. h. einen virtuellen Neutralleiter, eingespeist und über die Sternkondensatoren 34 in die einzelnen Phasen L1, L2, L3 eingekoppelt.

Bei Netzwerken mit einem Neutralleiter N, in Fig. 1 gestrichelt dargestellt, kann der Ausgang der Stromquelle 30 auch direkt zur Einspeisung des Kompensationsstroms IK mit dem Neutralleiter N verbunden sein.

Der Strompfad des Erdungskondensators 62 wird bei Netzzuschaltung mittels des Zeitglieds 68 und des Relais 66 zeitverzögert zugeschaltet, vorzugsweise mit einer Zeitverzögerung von T = 500 ms. Die Zeitverzögerung wird über das Zeitglied 68 realisiert. Ursächlich für die verzögerte Zuschaltung ist, dass die Einrichtung 24 gemäß Ausführungsbeispiel nicht netzunabhängig versorgt wird, sondern über den Spannungswandler 38. Durch die zeitverzögerte Zuschaltung ist sichergestellt, dass sowohl der Spannungswandler 38 als auch die Einrichtung 24 zur Kompensation des Ableitstroms IA sich im eingeschwungenen Zustand befinden, bevor betriebsbedingte Ableitströme IA durch den Erdungskondensator 62 fließen. Das Schaltelement 60 ist zwischen dem Sternpunkt 58 und dem Eingang des Erdungskondensators 62 angeordnet, um sicherzustellen, dass der Erdungskondensator 62 im ausgeschalteten Zustand über den Messwiderstand 64 an Erdpotential 50 liegt.

Die Schaltungsanordnung zeichnet sich gegenüber dem Stand der Technik dadurch aus, dass ausschließlich der durch das EMV-Filter 18 erzeugte Ableitstrom IA kompensiert wird. Folglich können Anlagen, die mit einem derartigen EMV-Filter 18 ausgestattet sein müssen, an Fehlerstromschutzeinrichtungen sicher betrieben werden. Auch ist durch den erfindungsgemäßen Ableitstromkompensator 20 sichergestellt, dass im Fehlerfall auftretende Fehlerströme weder erfasst, noch gegenkompensiert werden.

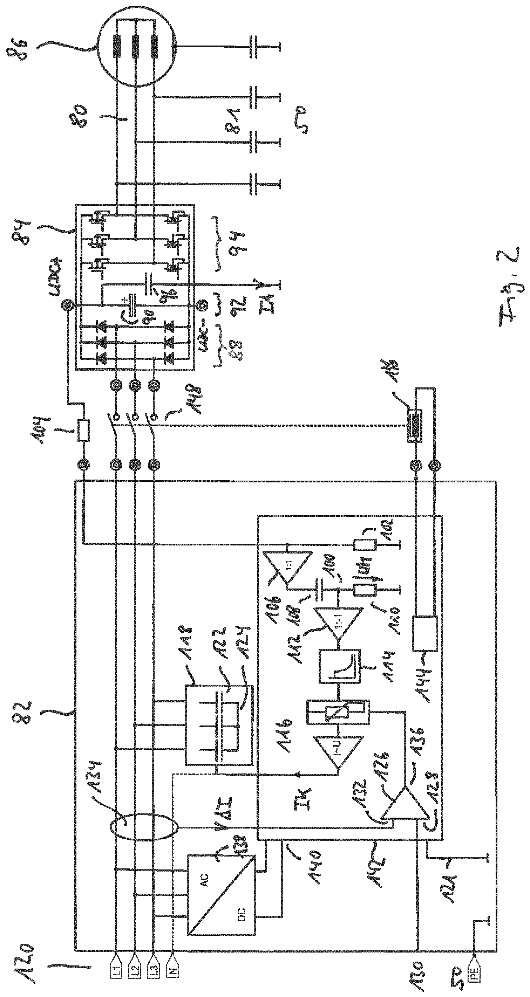

Fig. 2 zeigt eine zweite Ausführungsform eines erfindungsgemäßen Ableitstromkompensators 82, der netzseitig einem Frequenzumrichter 84 vorgeschaltet ist, über den ein elektrischer Antrieb 86 angesteuert wird.

Der Frequenzumrichter 84 weist eingangsseitig einen Gleichrichter 88 auf, dessen Ausgangsspannung UDC+, UDC- durch einen Glättungskondensator 90 geglättet wird, der einen Zwischenkreis 92 bildet. An dem Glättungskondensator 90 ist ein Wechselrichter 94 angeschlossen, über den eine regelbare Wechselspannung zur Ansteuerung des elektrischen Antriebs 86 bereitgestellt wird.

Gemäß Ausführungsbeispiel weist der Frequenzumrichter 84 ein eigenes EMV-Filter 96 auf, das im dargestellten Ausführungsbeispiel als Filterkondensator bzw. Erdungskondensator 96 ausgebildet ist, der von einem Pluspol UDC+ des Zwischenkreises 92 gegen Erdpotential 50 verschaltet ist. Beim Betrieb des Frequenzumrichters 84 fließt über den Filterkondensator 96 ein Ableitstrom IA gegen Erdpotential 50, der zum Auslösen eines Fehlerstromschutzschalters (nicht dargestellt) führen kann.

Der erfindungsgemäße Ableitstromkompensator 82 ist ausgebildet, um den durch den Filterkondensator 96 des Frequenzumrichters 84 erzeugten Ableitstrom IA zu kompensieren.

Da der Ableitstrom IA durch den Erdungskondensator 96 in dem Frequenzumrichter 84 bauartbedingt nicht erfassbar ist, wird gemäß der Erfindung vorgeschlagen, dass die an dem Pluspol UDC+ bzw. Minuspol UDC- des Zwischenkreises 92 anliegende pulsierende DC-Spannung, welche die Ursache für den Ableitstrom IA ist, mittels einer Messeinrichtung 100 erfasst wird.

Die Welligkeit der DC-Spannung ergibt sich durch die nicht konstante Mittelpunktspannung des Gleichrichters 88, die im vorliegenden Fall als 6-Puls-Brücke ausgebildet ist. An dem Pluspol UDC+ bzw. Minuspol UDC- des Zwischenkreises 92 liegt jeweils eine pulsierende DC-Spannung an, wobei eine Addition der beiden Spannungen UDC+ und UDC- eine Dreieckspannung von 160 Vss mit einer Frequenz von 150 Hz ergeben würde.

Das erfindungsgemäße Prinzip besteht darin, den Verlauf der DC-Spannung gegen Neutralleiter N oder Schutzleiter PE im Zwischenkreis 92 zunächst über einen ohmschen Spannungsteiler, umfassend einen Widerstand 102 und einen Vorwiderstand 104, zu teilen, wobei der Vorwiderstand mit einem Anschluss entweder an der Spannung UDC+ oder der Spannung UDC- angeschlossen ist und über den Widerstand 102 mit Erdpotential verbunden ist. Der Spannungsteiler aus Vorwiderstand 104 und Widerstand 102 weist vorzugsweise ein Teilerverhältnis von 1:100 auf.

Der durch den Filterkondensator 96 abfließende Ableitstrom IA folgt der Formel IA (t) = C_{Filter} x dUDC/dt. Der Ableitstrom IA folgt also der zeitlichen Änderung der Spannung UDC+ bzw. UDC- des Zwischenkreises 92. Dabei geht der DC-Anteil verloren und aus einer Dreieckspannung entsteht ein Rechteckstrom.

Unter der Bedingung, dass der DC-Zwischenkreis 92 für Frequenzen ≤ 150 Hz einen sehr geringen Innenwiderstand gegenüber der kapazitiven Impedanz des Filterkondensators 96 aufweist, ist der zeitliche Verlauf des Ableitstroms IA eindeutig aus dem Verlauf der DC-Spannung zu rekonstruieren. Mit Änderung der Kapazität ändert sich die Amplitude des Ableitstroms IA während die Signalform weitgehend gleich bleibt.

Gemäß der Erfindung wird die DC-Spannung UDC+ bzw. UDC- gegen Erdpotential 50 rein ohmsch erfasst und durch den Spannungsteiler aus Vorwiderstand 104 und Widerstand 102 etwa durch den Faktor 100, z. B. 1 MΩ zu 10 kΩ, geteilt.

Dabei entsteht eine Spannung von ca. 3 V DC gegen Erdpotential 50 mit einer Welligkeit von ca. 1 V und einem Innenwiderstand von ca. 10 kΩ. Diese Spannung wird einem Impedanzwandler 106 in Form eines Transistors oder Operationsverstärkers zugeführt, der das Signal vorzugsweise 1:1 abbildet und mit einem Innenwiderstand von ca. 100 Ω zur Verfügung stellt. Die Realisierung der obigen Differenzierungsformel IA (t) = C_{Filter} x dUDC/dt erfolgt durch die Reihenschaltung eines Kondensators 108 mit einem Messwiderstand 110, der mit Erdpotential 50 verbunden ist.

Mit einem Kondensator 108 mit einer Kapazität von 47nF/10V und einem Messwiderstand 110 von vorzugsweise 100 Ω wird eine Impedanz von 2,3 KΩ bei 150 Hz realisiert. Das an dem Messwiderstand 110 anliegende Signal wird mittels eines Inverters 112 invertiert und gegebenenfalls nach Tiefpassfilterung durch einen Tiefpassfilter 114 einer Endstufe 116 in Form einer spannungsgesteuerten Stromquelle 116 zugeführt, die den Kompensationsstrom IK über eine Einspeiseschaltung 118 in die Phasen L1, L2, L3 eines Dreiphasennetzes 120 einspeist. Die Stromquelle ist über die Verbindung 121 mit Erdpotential 50 des Schutzleiters PE verbunden.

In einem Stromnetz mit Neutralleiter N kann der Kompensationsstrom IK auch unmittelbar in den Neutralleiter N (in Fig. 2 gestrichelt dargestellt) eingespeist werden.

Die Einspeiseschaltung 118 kann als Sternschaltung von drei Kondensatoren 122 ausgebildet sein, die jeweils mit einer Phase L1, L2, L3 verbunden sind und über einen Sternpunkt 124 verschaltet wird. Der Kompensationsstrom IK kann gegebenenfalls unter Zwischenschaltung einer Anpassungsschaltung in den Sternpunkt 124 eingespeist werden.

Aufgrund unterschiedlicher technischer Ausführungen des Filterkondensators 96 in verschiedenen Frequenzumrichtern 84, kann die erfindungsgemäß vorgeschlagene Stromspiegelung zwar den korrekten zeitlichen Verlauf des Ableitstroms IA abbilden, jedoch nicht die Amplitude des Ableitstroms IA. Folglich muss der Betrag der Amplitude des Kompensationsstroms IK einmalig für den entsprechenden Frequenzumrichter-Typ eingestellt bzw. mit einer Teach-Funktion angelernt werden.

Für diesen Zweck ist ein Vergleicher 126 vorgesehen, an dessen ersten Eingang 128 ein variables Teach-Signal eingespeist wird. Ein zweiter Eingang 132 ist mit einer Messeinrichtung 134 in Form eines Differenzstromwandlers verbunden. Mittels des Differenzstromwandlers 134 wird ein Differenzstrom der Phasen L1, L2, L3 gemessen. Der mittels des Differenzstromwandlers 134 gemessene Differenzstrom ΔI wird dem zweiten Eingang 132 des Vergleichers zugeführt. In dem Vergleicher 126 wird das Teach-Signal 130 mit dem Differenzstrom ΔI verglichen. An einem Ausgang 136 des Vergleichers 126, der mit einem Eingang der steuerbaren Stromquelle 116 verbunden ist, liegt entsprechend des Ergebnisses des Vergleichs ein Steuersignal an, mittels dem die Amplitude des am Ausgang der steuerbaren Stromquelle 116 fließenden Kompensationsstroms IK einstellbar ist. Sobald der Differenzstrom ΔI dem Teach-Signal entspricht, wird eine Teach-Funktion ausgelöst, durch die die Ausregelung beendet wird, wodurch der Verstärkungspegel der Stromquelle 116 auf dem eingestellten Pegel verbleibt.

In diesem Zusammenhang ist anzumerken, dass bei einer Serienanwendung die Teach-Funktion zur Amplitudenbestimmung entfallen kann, da die Ableitströme IA der Frequenzumrichter bekannt sind und sich die Dimensionierung der Verstärkerstufe entsprechend anpassen lässt.

Die Einrichtung zur Kompensation des Ableitstroms IA wird über einen Spannungswandler 138 mit Spannung versorgt. Dieser ist eingangsseitig mit den Phasen L1, L2, L3 und ausgangseitig mit einem Spannungseingang 140 der Einrichtung 142 verbunden. Da die Einrichtung 142 zur Kompensation des Ableitstroms nicht netzunabhängig versorgt wird, muss gewährleistet sein, dass die Funktionen der Schaltung im eingeschwungenen Zustand sind, d. h. insbesondere der Spannungswandler eingeschwungen ist, bevor betriebsbedingte Ableitströme entstehen. Daher erfolgt die Netzzuschaltung des Frequenzumrichters 84 zeitverzögert. Hierfür weist der Ableitstromkompensator 82 ein Zeitglied 144 auf, über das ein Schaltmittel 146 wie Relais oder Schütz zeitverzögert, vorzugsweise mit einer Zeitverzögerung T = 500 ms, eingeschaltet wird. Über das Schaltmittel 146 wird ein dreiphasiger Schalter 148 angesteuert, über den der Eingang des Gleichrichters 88 mit dem Dreiphasennetz 120 verbindbar ist. Mit anderen Worten wird die zeitverzögerte Zuschaltung des Schaltmittels 144 wie Schütz zur Spannungsversorgung des Frequenzumrichters 84 mit einem potentialfreien Relaisausgang realisiert.

Mit den erfindungsgemäßen Ausführungsformen von Ableitstromkompensatoren 20, 82 sowie dem erfindungsgemäßen Verfahren können betriebsbedingte Ableitströme IA, die in EMV-Komponenten wie Erdungskondensatoren erzeugt werden, in Echtzeit sicher erfasst und präzise gegenkompensiert werden. Somit können Anlagen, die zum Erreichen gesetzlicher Anforderungen an die elektromagnetische Verträglichkeit (EMV) mit solchen EMV-Komponenten ausgestattet sein müssen, an Fehlerstromschutzreinrichtungen betrieben werden. Zudem ist sichergestellt, dass im Fehlerfall auftretende Fehlerströme, d. h. Ströme, die über eine gegebene Fehlerstelle aufgrund eines Isolationsfehlers fließen (VDE 0100/200), weder erfasst, noch gegenkompensiert werden.

Erfindungsgemäß werden die Ableitströme IA unmittelbar in den Verursachern, im vorliegenden Fall insbesondere den Erdungskondensatoren 62, 96 erfasst und direkt gegenkompensiert. Das erfindungsgemäße Verfahren und die Vorrichtung haben keinen Einfluss auf etwaige vorgeschaltete Schutzeinrichtungen wie Fehlerstromschutzschalter.

Durch den Einsatz der erfindungsgemäßen Ableitstromkondensatoren können in dem EMV-Filter 18 und/oder der Antriebskomponente wie Frequenzumrichter 84 Kondensatoren 62, 96 mit höheren Kapazitäten eingesetzt werden, wodurch bessere EMV-Wirkungen erzielt werden. Die dadurch bedingt entstehenden höheren kapazitiven Ableitströme IA können auf einfache Weise durch die erfindungsgemäßen Ableitstromkompensatoren kompensiert werden.

Der erfindungsgemäße Ableitstromkompensator 20 kann z. B. unmittelbar in dem EMV-Filter 18 integriert werden, wodurch Kondensatoren mit höheren Kapazitäten und folglich platzraubende Induktivitäten vermieden werden können. Die EMV-Filter können wesentlich kleiner ausgebildet sein.

Ferner kann der erfindungsgemäße Ableitstromkompensator 82 unmittelbar in Frequenzumrichtern und anderen Antriebskomponenten eingesetzt werden.

## Patentansprüche

1. Verfahren zur Kompensation eines durch eine Oberwelle in einer Spannung eines Stromnetzes (16, 120), wie z. B. eines Drehstromnetzes, durch ein EMV-Filter (18, 96) verursachten betriebsbedingten Ableitstroms IA, wobei eine zu dem Ableitstrom IA proportionale Größe UM erfasst und einer Einrichtung (24, 142) zur Erzeugung eines Kompensationsstroms IK zugeführt wird, die einen Kompensationsstrom IK erzeugt, der dem betriebsbedingten Ableitstrom IA entgegengerichtet ist und dem betriebsbedingten Ableitstrom IA derart überlagert wird, dass dieser reduziert, insbesondere im Wesentlichen kompensiert wird, wobei das EMV-Filter (18, 96) einen Strompfad mit zumindest einem gegen Erdpotential (50) geschalteten Erdungskondensator (62, 96) aufweist, über den der betriebsbedingte Ableitstrom IA gegen Erdpotential (50) abgeleitet wird, und wobei die dem betriebsbedingten Ableitstrom IA proportionale Größe UM unmittelbar in dem Strompfad des Erdungskondensators (62) gemessen wird oder aus der an dem Erdungskondensator (96) anliegenden Spannung abgeleitet wird,
**dadurch gekennzeichnet,**
**dass** die dem betriebsbedingten Ableitstrom IA proportionale Größe UM mittels eines in Reihe zu dem Erdungskondensator (62) geschalteten Messwiderstand (64) in Form einer Messspannung gemessen wird oder dass die an dem Erdungskondensator (96) anliegende Spannung mittels einer parallel zu dem Erdungskondensator (96) geschalteten Reihenschaltung aus einem Messwiderstand (110) und einem Messkondensator (108) gegen Erdpotential (50) geschaltet wird, und dass die dem betriebsbedingten Ableitstrom IA proportionale Größe UM in Form einer Messspannung an dem Messwiderstand (110) gemessen wird.

2. Verfahren nach Anspruch 1,
**dadurch gekennzeichnet,**
**dass** die an dem Erdungskondensator (96) anliegende Spannung mittels eines, vorzugsweise hochohmigen, Spannungsteilers (102, 104) geteilt und einem Impedanzwandler (106) zugeführt wird, der das Spannungssignal, vorzugsweise 1:1, abbildet, dass das an dem Ausgang des Impedanzwandlers (106) anliegende Spannungssignal mittels eines Differenziergliedes in Form eines RC-Hochpasses aus der Reihenschaltung des Messkondensators (108) und des Messwiderstandes (110) differenziert wird, und dass die dem betriebsbedingten Ableitstrom IA proportionale Größe UM in Form der Messspannung an dem Messwiderstand (110), wie z. B. einem Shunt, gemessen wird.

3. Verfahren nach Anspruch 1 oder 2,
**dadurch gekennzeichnet,**
**dass** die Messspannung, vorzugsweise nach Tiefpassfilterung, mittels eines Inverters (28, 112) invertiert und einer spannungsgesteuerten Stromquelle (30, 116) zugeführt wird, die den Kompensationsstrom IK in einen Neutralleiter N, einen Schutzleiter PE und/oder in die Phasen L1, L2, L3 des Stromnetzes (16, 120) treibt.

4. Verfahren nach Anspruch 3,
**dadurch gekennzeichnet,**
**dass** eine Amplitude des Kompensationsstroms IK einmalig für ein EMV-Filter eingestellt wird, wobei mittels einer Differenzstrommessung (134) ein Differenzstrom in den Phasen L1, L2, L2 des Stromnetzes (120) erfasst wird, wobei aus einem Vergleich des Differenzstroms und einem, vorzugsweise mittels einer Eingabe-Funktion vorgebbaren, variablem Stromsignal ein Steuersignal für die spannungsgesteuerte Stromquelle (116) derart ermittelt wird, dass die Amplitude des Kompensationsstroms IK derart eingestellt wird, dass der betriebsbedingte Ableitstrom IA kompensiert wird.

5. Verfahren nach zumindest einem der vorhergehenden Ansprüche,
**dadurch gekennzeichnet,**
**dass** der Erdungskondensator (96) oder eine den Erdungskondensator aufweisende Komponente (84), wie z. B. Frequenzumrichter, mittels eines Schaltelementes (146, 148), wie z. B. einem Schütz, zeitverzögert zugeschaltet wird, wobei die Zuschaltung vorzugsweise mit einer Zeitverzögerung T im Bereich von 200 ms ≤ T ≤ 800 ms, besonders bevorzugt mit T = 500 ms erfolgt.

6. Vorrichtung (20, 82) zur Kompensation eines durch eine Oberwelle in einer Spannung eines Stromnetzes (16, 120), wie z. B. ein Drehstromnetz, durch ein EMV-Filter (18, 96) verursachten betriebsbedingten Ableitstroms IA, wobei eine zu dem Ableitstrom IA proportionale Größe UM erfasst und einer Einrichtung (24, 142) zur Erzeugung eines Kompensationsstroms IK zugeführt wird, die dazu eingerichtet ist, einen Kompensationsstrom IK zu erzeugen, der dem betriebsbedingten Ableitstrom IA entgegengerichtet ist und dem betriebsbedingten Ableitstrom IA derart überlagert wird, dass dieser reduziert, insbesondere im Wesentlichen kompensiert wird, wobei das EMV-Filter (18, 96) einen Strompfad mit zumindest einem gegen Erdpotential (50) geschalteten Erdungskondensator (62, 96) aufweist, der dazu eingerichtet ist, betriebsbedingten Ableitstrom IA gegen Erdpotential (50) abzuleiten, und wobei in dem Strompfad des Erdungskondensators (62) eine Messeinrichtung (64) zum Messen der dem betriebsbedingten Ableitstrom IA proportionalen Größe UM angeordnet ist oder wobei parallel zu dem Erdungskondensator (96) eine Messeinrichtung (100) angeordnet ist, die ausgebildet ist, die dem betriebsbedingten Ableitstrom IA proportionale Größe UM aus der an dem Erdungskondensator (62, 96) anliegenden Spannung abzuleiten,
**dadurch gekennzeichnet,**
**dass** die Messeinrichtung (64) als ein in Reihe zu dem Erdungskondensator (62) geschalteter Messwiderstand ausgebildet ist, und dass der Messwiderstand (64) mit Erdpotential (50) verbunden ist oder dass die Messeinrichtung (100) als eine Reihenschaltung aus einem Messkondensator (108) und einem Messwiderstand (110) ausgebildet ist, die parallel zu dem Erdungskondensator (96) geschaltet ist, wobei der Messwiderstand (110) mit Erdpotential (50) verbunden ist.

7. Vorrichtung nach Anspruch 6,
**dadurch gekennzeichnet,**
**dass** die Messeinrichtung (100) ein Differenzierglied in Form eines RC-Hochpasses aus der Reihenschaltung des Messkondensators (108) und des mit Erdpotential verbundenen Messwiderstandes (110) ist, wobei der Messkondensator mit einem Ausgang eines Impedanzwandlers (106) verbunden ist und ein Eingang des Impedanzwandlers über einen Spannungsteiler (102, 104) mit der an dem Erdungskondensator anliegenden Spannung UDC+, UDC- gekoppelt ist.

8. Vorrichtung nach zumindest einem der Ansprüche 6 bis 7,
**dadurch gekennzeichnet,**
**dass** der Messwiderstand (64, 110), gegebenenfalls über ein Tiefpassfilter (26, 114), mit einem Eingang eines Inverters (28, 112) verbunden ist, wobei der Tiefpassfilter (26, 114) einen Frequenzbereich von vorzugsweise 20 Hz bis 2 kHz aufweist und/oder dass ein Ausgang des Inverters (28, 112), gegebenenfalls über ein Tiefpassfilter, mit einem Eingang einer gesteuerten, vorzugsweise spannungsgesteuerten Stromquelle (30, 116) zur Erzeugung des Kompensationsstroms IK verbunden ist, und dass ein Ausgang der gesteuerten Stromquelle (30, 116) zur Einprägung des Kompensationsstroms IK in das Stromnetz mit einem Neutralleiter N, einem Schutzleiter PE und/oder mit einem Einspeisenetzwerk (32, 118) zur Einspeisung in Phasen L1, L2, L3 eines Drehstromnetzes als das Stromnetz (16, 120) verbunden ist.

9. Vorrichtung nach zumindest einem der vorhergehenden Ansprüche 6 bis 8,
**dadurch gekennzeichnet,**
**dass** der Erdungskondensator (62) ein Filterkondensator in Form eines Y-Kondensators des EMV-Filters (18) ist, wobei das EMV-Filter (18) des Weiteren eine Sternschaltung (56) aus Filterkondensatoren in Form von X-Kondensatoren umfasst, die jeweils mit einer Phase L1, L2, L3 des Drehstromnetzes (16) und einem Sternpunkt (58) verbunden sind und dass die Reihenschaltung aus Erdungskondensator (62) und Messwiderstand (64) mittels eines Schaltelementes (60) zeitverzögert mit dem Sternpunkt (58) der Sternschaltung aus Filterkondensatoren des EMV-Filters verbindbar ist oder dass der Erdungskondensator (96) ein Filterkondensator eines DC-Zwischenkreises (92) vorzugsweise eines Frequenzumrichters (84) ist, wobei der Filterkondensator (96) von einem Plus- oder Minus-Pol des DC-Zwischenkreises (92) gegen Erdpotential (50) geschaltet ist, und dass die Reihenschaltung aus Messkondensator (108) und Messwiderstand (110) über den Impedanzwandler (106) an dem Plus- oder Minus-Pol des DC-Zwischenkreises (92) angeschlossen ist.

10. Vorrichtung nach Anspruch 8,
**dadurch gekennzeichnet,**
**dass** die Vorrichtung eine Einrichtung (134) zur Messung eines Differenzstroms in einer Netzzuleitung umfasst, wobei der Differenzstrom an einem zweiten Eingang (132) eines Vergleichers (126) anliegt und der Vergleicher (126) eingerichtet ist, den Differenzstrom mit einem, vorzugsweise mittels einer Eingabe-Funktion, an einem ersten Eingang (128) des Vergleichers (132) vorgebbaren variablen Signal zu vergleichen und wobei ein Ausgang (136) des Vergleichers (126) mit einer steuerbaren Stromquelle (116) verbunden ist, wobei die Stromquelle (116) eigerichtet ist, in Abhängigkeit des Vergleichs der Eingangsgrößen eine Verstärkung derart einzustellen, dass der Ableitstrom IA kompensiert wird.

11. Vorrichtung nach zumindest einem der vorhergehenden Ansprüche 6 bis 10,
**dadurch gekennzeichnet,**
**dass** die den Erdungskondensator (96) aufweisende Komponente (84), insbesondere ein Frequenzumrichter, dazu eingerichtet ist, mittels eines Schaltelementes (146, 148), wie z. B. eines Schützes, zeitverzögert mit dem Stromnetz (120) verbunden zu werden.

12. Vorrichtung nach Anspruch 9 oder 11,
**dadurch gekennzeichnet,**
**dass** das EMV-Filter (18) mit dem Y-Kondensator als Erdungskondensator und der Sternschaltung aus X-Kondensatoren in der Vorrichtung (20) integriert ist und/oder dass die Vorrichtung in dem Frequenzumrichter (84) integriert ist.

13. EMV-Filter (18) umfassend eine Sternschaltung (56) aus X-Kondensatoren, die mit einem ersten Anschluss jeweils mit einer Phase L1, L2, L3 eines Drehstromnetzes (16) und mit einem zweiten Anschluss mit einem gemeinsamen Sternpunkt (58) verbunden sind sowie zumindest einen Y-Kondensator als Erdungskondensator (62), der mit einem ersten Anschluss mit dem Sternpunkt (58) der Sternschaltung aus X-Kondensatoren verbunden ist,
**dadurch gekennzeichnet,**
**dass** der Erdungskondensator (62) mit seinem zweiten Anschluss über einen Messwiderstand (64) mit Erdpotential (50) verbunden ist oder dass parallel zu dem Erdungskondensator (62), vorzugsweise über einen Impedanzwandler, eine Reihenschaltung aus einem Messkondensator und einem Messwiderstand geschaltet ist, wobei der Messwiderstand (64) dazu eingerichtet ist, eine dem Strom IA durch den Erdungskondensator (62) proportionale Messspannung UM abzuleiten, dass der Messwiderstand (64) gegebenenfalls über ein Tiefpassfilter (26) mit einem Eingang eines Inverters (28) verbunden ist, dass ein Ausgang des Inverters (28) gegebenenfalls über ein Tiefpassfilter mit dem Eingang einer gesteuerten, vorzugsweise spannungsgesteuerten Stromquelle (30) zur Erzeugung eines Kompensationsstroms IK verbunden ist, und dass ein Ausgang der gesteuerten Stromquelle (30) zur Einprägung des Kompensationsstroms IK in das Stromnetz mit einem Neutralleiter N, einem Schutzleiter PE und/oder mit einem Einspeisenetzwerk (32) zur Einspeisung in die Phasen L1, L2, L3 des Drehstromnetzes (16) verbunden ist.

## Claims

1. A method for compensating an operation-related leakage current IA caused by a harmonic in a voltage of a power supply network (16, 120), for example of a three-phase power supply network, by an EMI filter (18, 96), wherein a quantity UM proportional to the leakage current IA is detected and passed to a device (24, 142) for generating a compensation current IK, which generates a compensation current IK which is in the opposite direction to the operation-related leakage current IA and which is superimposed on the operation-related leakage current IA such that the latter is reduced, in particular substantially compensated, wherein the EMI filter (18, 96) has a current path with at least one grounding capacitor (62, 96) connected against ground potential (50) and via which path the operation-related leakage current IA is conducted against ground potential (50), and wherein the quantity UM proportional to the operation-related leakage current IA is measured directly in the current path of the grounding capacitor (62) or is deduced from the voltage applied at the grounding capacitor (96),
**characterized in**
**that** the quantity UM proportional to the operation-related leakage current IA is measured by means of a measuring resistor (64), connected in series to the grounding capacitor (62), in the form of a measured voltage, or in that the voltage applied at the grounding capacitor (96) is connected against ground potential (50) by means of a series connection, in parallel to the grounding capacitor (96), made up of a measuring resistor (110) and a measuring capacitor (108), and in that the quantity UM proportional to the operation-related leakage current IA is measured at the measuring resistor (110) in the form of a measured voltage.

2. The method according to claim 1,
**characterized in**
**that** the voltage applied at the grounding capacitor (96) is divided by means of a preferably high-resistance voltage divider (102, 104) and passed to an impedance converter (106) which outputs the voltage signal, preferably 1:1, in that the voltage signal applied at the output of the impedance converter (106) is differentiated by means of a differentiator in the form of an RC high pass from the series connection of the measuring capacitor (108) and of the measuring resistor (110), and in that the quantity UM proportional to the operation-related leakage current IA is measured at the measuring resistor (110), for example at a shunt resistor, in the form of the measured voltage.

3. The method according to claim 1 or 2,
**characterized in**
**that** the measured voltage is, preferably after low pass filtering, inverted by means of an inverter (28, 112) and passed to a voltage-controlled power source (30, 116) which drives the compensation current IK into a neutral conductor N, a protective earth PE and/or the phases L1, L2, L3 of the power supply network (16, 120).

4. The method according to claim 3,
**characterized in**
**that** an amplitude of the compensation current IK is set once for an EMI filter, wherein a differential current in the phases L1, L2, L3 of the power supply network (120) is detected by means of a differential current measurement (134), wherein a control signal for the voltage-controlled power source (116) is determined from a comparison of the differential current and of a variable current signal, preferably presettable by means of an input function, so that the amplitude of the compensation current IK is set such that the operation-related leakage current IA is compensated.

5. The method according to at least one of the preceding claims,
**characterized in**
**that** the grounding capacitor (96) or a component (84) having the grounding capacitor, for example a frequency converter, is switched in by means of a switching element (146, 148), for example by a contactor, with a time delay, wherein switching is performed preferably with a time delay T in the range 200 ms ≤ T ≤ 800 ms, particularly preferably T = 500 ms.

6. A device (20, 82) for compensating an operation-related leakage current IA caused by a harmonic in a voltage of a power supply network (16, 120), for example of a three-phase power supply network, by an EMI filter (18, 96), wherein a quantity UM proportional to the leakage current IA is detected and passed to a device (24, 142) for generating a compensation current IK and configured to generate a compensation current IK which is in the opposite direction to the operation-related leakage current IA and which is superimposed on the operation-related leakage current IA such that the latter is reduced, in particular substantially compensated, wherein the EMI filter (18, 96) has a current path with at least one grounding capacitor (62, 96) switched against ground potential (50) and which is configured to conduct the operation-related leakage current IA against ground potential (50), and wherein a measuring device (64) for measuring the quantity UM proportional to the operation-related leakage current IA is arranged in the current path of the grounding capacitors (62) or wherein a measuring device (100) is arranged parallel to the grounding capacitor (96) and is designed to deduce the quantity UM proportional to the operation-related leakage current IA from the voltage applied at the grounding capacitor (62, 96),
**characterized in**
**that** the measuring device (64) is designed as a measuring resistor connected in series to the grounding capacitor (62), and in that the measuring resistor (64) is connected to ground potential (50) or in that the measuring device (100) is designed as a series connection, made up of a measuring capacitor (108) and a measuring resistor (110), which is connected in parallel to the grounding capacitor (96), wherein the measuring resistor (110) is connected to ground potential (50).

7. The device according to claim 6,
**characterized in**
**that** the measuring device (100) is a differentiator in the form of an RC high pass from a series connection of the measuring capacitor (108) and of the measuring resistor (110) connected to ground potential, wherein the measuring capacitor is connected to an output of an impedance converter (106) and an input of the impedance converter is linked via a voltage divider (102, 104) to the voltage UDC+, UDC- applied at the grounding capacitor.

8. The device according to at least one of claims 6 to 7,
**characterized in**
**that** the measuring resistor (64, 110) is connected, optionally via a low pass filter (26, 114), to an input of an inverter (28, 112), wherein the low pass filter (26, 114) has a frequency range of preferably 20 Hz to 2 kHz, and/or in that an output of the inverter (28, 112) is connected, optionally via a low pass filter, to an input of a controlled, preferably voltage-controlled, power source (30, 116) for generating the compensation current IK, and in that an output of the controlled power source (30, 116) is, for impressing the compensation current IK into the power supply network, connected to a neutral conductor N, to a protective earth PE and/or to a feed network (32, 118) for feeding into phases L1, L2, L3 of a three-phase power supply network used as the power supply network (16, 120).

9. The device according to at least one of the preceding claims 6 to 8,
**characterized in**
**that** the grounding capacitor (62) is a filter capacitor in the form of a Y-capacitor of the EMI filter (18), wherein the EMI filter (18) furthermore comprises a star connection (56), made up of filter capacitors in the form of X-capacitors which are each connected to a phase L1, L2, L3 of the three-phase power supply network (16) and to a star point (58), and in that the series connection, made up of the grounding capacitor (62) and the measuring resistor (64), is connectable to the star point (58) of the star connection, made up of filter capacitors of the EMI filter, by means of a switching element (60) with a time delay, or in that the grounding capacitor (96) is a filter capacitor of a DC intermediate circuit (92) preferably of a frequency converter (84), wherein the filter capacitor (96) is connected against ground potential (50) by a positive or negative terminal of the DC intermediate circuit (92), and in that the series connection of measuring capacitor (108) and measuring resistor (110)) is connected via the impedance converter (106) to the positive or negative terminal of the DC intermediate circuit (92.

10. The device according to claim 8,
**characterized in**
**that** the device comprises a device (134) for measuring a differential current in a network supply cable, wherein the differential current is applied at a second input (132) of a comparator (126) and the comparator (126) is configured to compare the differential current with a variable signal, preferably presettable by means of an input function, at a first input (128) of the comparator (132), and wherein an output (136) of the comparator (126) is connected to a controllable power source (116), wherein the power source (116) is configured to set, depending on the comparison of the input quantities, an amplification such that the leakage current IA is compensated.

11. The device according to at least one of the preceding claims 6 to 10,
**characterized in**
**that** the component (84) having the grounding capacitor (96), in particular a frequency converter, is configured to be connected to the power supply network (120) by means of a switching element (146, 148), for example a contactor, with a time delay.

12. The device according to claim 9 or 11,
**characterized in**
**that** the EMI filter (18) is integrated in the device (20) with the Y-capacitor as the grounding capacitor and with the star connection of X-capacitors, and/or in that the device is integrated in the frequency converter (84).

13. An EMI filter (18), comprising a star connection (56) of X-capacitors, which are each connected with a first connection to a phase L1, L2, L3 of a three-phase power supply network (16) and with a second connection to a common star point (58), and at least one Y-capacitor as the grounding capacitor (62), which is connected with a first connection to the star point (58) of the star connection of X-capacitors,
**characterized in**
**that** the grounding capacitor (62) is connected to ground potential (50) with its second connection via a measuring resistor (64) or in that a series connection made up of a measuring capacitor and of a measuring resistor is connected in parallel to the grounding capacitor (62), preferably via an impedance converter, wherein the measuring resistor (64) is configured to deduce a measured voltage UM proportional to the current IA through the grounding capacitor (62), in that the measuring resistor (64) is connected, optionally via a low pass filter (26), to an input of an inverter (28), in that an output of the inverter (28) is connected, optionally via a low pass filter, to the input of a controlled, preferably voltage-controlled, power source (30) for generating a compensation current IK, and in that an output of the controlled power source (30) is, for impressing the compensation current IK into the power supply network, connected to a neutral conductor N, to a protective earth PE and/or to a feed network (32) for feeding into the phases L1, L2, L3 of the three-phase power supply network (16).

## Revendications

1. Procédé pour la compensation d'un courant de fuite IA dû à l'exploitation, occasionné par une onde harmonique dans une tension d'un réseau de courant (16, 120), par ex. d'un réseau de courant triphasé, par un filtre CEM (18, 96), sachant qu'une grandeur UM proportionnelle au courant de fuite IA est acquise et est distribuée à un équipement (24, 142) pour créer un courant de compensation IK, lequel équipement crée un courant de compensation IK qui est dans le sens inverse du courant de fuite IA dû à l'exploitation et est superposé au courant de fuite IA dû à l'exploitation de telle sorte que celui-ci est réduit, notamment est essentiellement compensé, sachant que le filtre CEM (18, 96) présente un trajet du courant avec au moins un condensateur de mise à la terre (62, 96) relié au potentiel de terre (50), par le biais duquel le courant de fuite IA dû à l'exploitation est dérivé vers le potentiel de terre (50), et sachant que la grandeur UM proportionnelle au courant de fuite IA dû à l'exploitation est mesurée directement dans le trajet du courant du condensateur de mise à la terre (62) ou est dérivée de la tension appliquée au condensateur de mise à la terre (96),
**caractérisé en ce**
**que** la grandeur UM proportionnelle au courant de fuite IA dû à l'exploitation est mesurée sous la forme d'une tension de mesure, au moyen d'une résistance de mesure (64) reliée en série au condensateur de mise à la terre (62) ou que la tension appliquée au condensateur de mise à la terre (96) est reliée au potentiel de terre (50) au moyen d'un montage en série relié en parallèle au condensateur de mise à la terre (96), composé d'une résistance de mesure (110) et d'un condensateur de mesure (108), et que la grandeur UM proportionnelle au courant de fuite IA dû à l'exploitation est mesurée sur la résistance de mesure (110) sous la forme d'une tension de mesure.

2. Procédé selon la revendication 1,
**caractérisé en ce**
**que** la tension appliquée au condensateur de mise à la terre (96) est divisée au moyen d'un diviseur de tension (102, 104) de préférence à forte impédance et est distribuée à un buffer (106) qui reproduit de préférence à l'identique le signal de tension, que le signal de tension appliqué à la sortie du buffer (106) est différencié au moyen d'un élément de différenciation sous la forme d'un filtre passe-haut RC composé du montage en série du condensateur de mesure (108) et de la résistance de mesure (110), et que la grandeur UM proportionnelle au courant de fuite IA dû à l'exploitation est mesurée sous la forme de la tension de mesure sur la résistance de mesure (110), par ex. un shunt.

3. Procédé selon la revendication 1 ou 2,
**caractérisé en ce**
**que** la tension de mesure, de préférence après la filtration par passe-bas, est inversée au moyen d'un inverseur (28, 112) et distribuée à une source de courant (30, 116) commandée en tension, qui achemine le courant de compensation IK dans un conducteur neutre N, un conducteur de protection PE et/ou dans les phases L1, L2, L3 du réseau de courant (16, 120).

4. Procédé selon la revendication 3,
**caractérisé en ce**
**qu'**une amplitude du courant de compensation IK est réglée une unique fois pour un filtre CEM, sachant qu'un courant différentiel dans les phases L1, L2, L3 du réseau de courant (120) est acquis au moyen d'une mesure de courant différentiel (134), sachant qu'un signal de commande est déterminé pour la source de courant (116) commandée en tension à partir d'une comparaison du courant différentiel et d'un signal de courant variable, prédéterminable de préférence au moyen d'une fonction de saisie de telle sorte que l'amplitude du courant de compensation IK est réglée de telle sorte que le courant de fuite IA dû à l'exploitation est compensé.

5. Procédé selon au moins l'une des revendications précédentes,
**caractérisé en ce**
**que** le condensateur de mise à la terre (96) ou un composant (84) présentant le condensateur de mise à la terre, par ex. un convertisseur de fréquence, est commuté de manière temporisée au moyen d'un élément de commutation (146, 148), par ex. un contacteur, sachant que la commutation a lieu de préférence avec une temporisation T telle que 200 ms ≤ T ≤ 800 ms, notamment de préférence avec T = 500 ms.

6. Dispositif (20, 82) pour la compensation d'un courant de fuite IA dû à l'exploitation, occasionné par une onde harmonique dans une tension d'un réseau de courant (16, 120), par ex. d'un réseau de courant triphasé, par un filtre CEM (18, 96), sachant qu'une grandeur UM proportionnelle au courant de fuite IA est acquise et est distribuée à un équipement (24, 142) pour créer un courant de compensation IK, lequel équipement est configuré pour créer un courant de compensation IK qui est dans le sens inverse du courant de fuite IA dû à l'exploitation et est superposé au courant de fuite IA dû à l'exploitation de telle sorte que celui-ci est réduit, notamment est essentiellement compensé, sachant que le filtre CEM (18, 96) présente un trajet du courant avec au moins un condensateur de mise à la terre (62, 96) relié au potentiel de terre (50), qui est configuré pour dériver le courant de fuite IA dû à l'exploitation en direction du potentiel de terre (50), et sachant qu'est disposé, dans le trajet du courant du condensateur de mise à la terre (62), un équipement de mesure (64) pour mesurer la grandeur UM proportionnelle au courant de fuite IA dû à l'exploitation ou sachant qu'un équipement de mesure (100) est disposé parallèlement au condensateur de mise à la terre (96), lequel équipement est conçu pour dériver la grandeur UM proportionnelle au courant de fuite IA dû à l'exploitation, de la tension appliquée au condensateur de mise à la terre (62, 96),
**caractérisé en ce**
**que** l'équipement de mesure (64) est conçu sous forme de résistance de mesure montée en série avec le condensateur de mise à la terre (62), et que la résistance de mesure (64) est reliée au potentiel de terre (50), ou que l'équipement de mesure (100) est conçu sous forme de montage en série composé d'un condensateur de mesure (108) et d'une résistance de mesure (110), lequel montage est monté en parallèle au condensateur de mise à la terre (96), sachant que la résistance de mesure (110) est reliée au potentiel de terre (50).

7. Dispositif selon la revendication 6,
**caractérisé en ce**
**que** le dispositif de mesure (100) est un élément de différenciation sous la forme d'un filtre passe-haut RC composé du montage en série du condensateur de mesure (108) et de la résistance de mesure (110) reliée au potentiel de terre, sachant que le condensateur de mesure est relié à une sortie d'un buffer (106) et qu'une entrée du buffer est couplée à la tension UDC+, UDC- appliquée au condensateur de mise à la terre via un diviseur de tension (102, 104).

8. Dispositif selon au moins l'une des revendications 6 à 7,
**caractérisé en ce**
**que** la résistance de mesure (64, 110) est reliée à une entrée d'un inverseur (28, 112), le cas échéant via un filtre passe-bas (26, 114), sachant que le filtre passe-bas (26, 114) présente une plage de fréquences comprise de préférence entre 20 Hz et 2 kHz et/ou qu'une sortie de l'inverseur (28, 112) est reliée à une entrée d'une source de courant (30, 116) commandée, de préférence commandée en tension, le cas échéant via un filtre passe-bas, pour générer le courant de compensation IK, et qu'une sortie de la source de courant (30, 116) commandée, pour l'injection du courant de compensation IK dans le réseau de courant, est reliée à un conducteur neutre N, un conducteur de protection PE et/ou à un réseau d'alimentation (32, 118) pour l'alimentation dans des phases L1, L2, L3 d'un réseau de courant triphasé comme réseau de courant (16, 120).

9. Dispositif selon au moins l'une des revendications précédentes 6 à 8,
**caractérisé en ce**
**que** le condensateur de mise à la terre (62) est un condensateur de filtrage sous forme de condensateur Y du filtre CEM (18), sachant que le filtre CEM (18) comprend, de plus, un montage en étoile (56) composé de condensateurs de filtrage sous forme de condensateurs X qui sont reliés respectivement à une phase L1, L2, L3 du réseau de courant triphasé (16) et à un point neutre (58) et que le montage en série composé du condensateur de mise à la terre (62) et de la résistance de mesure (64) est reliable, de manière temporisée, au point neutre (58) du montage en étoile composé des condensateurs de filtrage du filtre CEM, au moyen d'un élément de commutation (60) ou que le condensateur de mise à la terre (96) est un condensateur de filtrage d'un circuit intermédiaire CC (92) de préférence d'un convertisseur de fréquence (84), sachant que le condensateur de filtrage (96) est relié d'un pôle plus ou moins du circuit intermédiaire CC (92) au potentiel de terre (50), et que le montage en série composé du condensateur de mesure (108) et de la résistance de mesure (110) est relié au pôle plus ou moins du circuit intermédiaire CC (92) par le biais du buffer (106).

10. Dispositif selon la revendication 8,
**caractérisé en ce**
**que** le dispositif comprend un équipement (134) destiné à mesurer un courant différentiel dans un câble d'alimentation, sachant que le courant différentiel est appliqué à une seconde entrée (132) d'un comparateur (126) et que le comparateur (126) est configuré pour comparer le courant différentiel à un signal variable prédéterminable sur une première entrée (128) du comparateur (132), de préférence au moyen d'une fonction de saisie et sachant qu'une sortie (136) du comparateur (126) est reliée à une source de courant commandable (116), sachant que la source de courant (116) est configurée pour régler une amplification selon la comparaison des valeurs d'entrée de telle sorte que le courant de fuite IA est compensé.

11. Dispositif selon au moins l'une des revendications précédentes 6 à 10,
**caractérisé en ce**
**que** le composant (84) présentant le condensateur de mise à la terre (96), notamment un convertisseur de fréquence, est configuré pour être relié de manière temporisée au réseau de courant (120) au moyen d'un élément de commutation (146, 148), par ex. un contacteur.

12. Dispositif selon la revendication 9 ou 11,
**caractérisé en ce**
**que** le filtre CEM (18) est intégré dans le dispositif (20) avec le condensateur Y comme condensateur de mise à la terre et avec le montage en étoile composé de condensateurs X et/ou que le dispositif est intégré dans le convertisseur de fréquence (84).

13. Filtre CEM (18) comprenant un montage en étoile (56) composé de condensateurs X qui sont reliés au niveau d'un premier raccord respectivement à une phase L1, L2, L3 d'un réseau de courant triphasé (16) et au niveau d'un second raccord à un point neutre (58) commun ainsi qu'au moins un condensateur Y comme condensateur de mise à la terre (62) qui est relié au niveau d'un premier raccord au point neutre (58) du montage en étoile composé de condensateurs X.
**caractérisé en ce**
**que** le condensateur de mise à la terre (62) est relié au niveau de son second raccord au potentiel de terre (50) au moyen d'une résistance de mesure (64) ou que parallèlement au condensateur de mise à la terre (62), un montage en série composé d'un condensateur de mesure et d'une résistance de mesure est branché de préférence via un buffer, sachant que la résistance de mesure (64) est configurée pour dériver une tension de mesure UM proportionnelle au courant IA par le condensateur de mise à la terre (62), que la résistance de mesure (64) est reliée à une entrée d'un inverseur (28) le cas échéant par un filtre passe-bas (26), qu'une sortie de l'inverseur (28) est reliée à l'entrée d'une source de courant (30) commandée, de préférence commandée en tension, le cas échéant via un filtre passe-bas, pour générer un courant de compensation IK, et qu'une sortie de la source de courant commandée (30) pour injecter le courant de compensation IK dans le réseau de courant est reliée à un conducteur neutre N, un conducteur de protection PE et/ou à un réseau d'alimentation (32) pour l'alimentation dans les phases L1, L2, L3 du réseau de courant triphasé (16).
